# EUROPÄISCHE PATENTSCHRIFT

(11) **EP 0 901 681 B1**
(45) Veröffentlichungstag und Bekanntmachung des Hinweises auf die Patenterteilung: **12.02.2003**
(21) Anmeldenummer: 97925857.1
(22) Anmeldetag: 22.05.1997
(51) Int. Cl.: G11B 33/04, B65D 85/57, A47B 81/06, A47B 87/02, B65D 21/02

(54) **HALTERUNG FÜR RECHTECKIGE GEGENSTÄNDE UND DEREN VERWENDUNG**
MOUNTING FOR RECTANGULAR OBJECTS AND USE THEREOF
SUPPORT POUR ARTICLES RECTANGULAIRES ET SON UTILISATION

(30) Priorität: 24.05.1996 DE 19621163
(43) Veröffentlichungstag der Anmeldung: 17.03.1999
(73) Patentinhaber: Rohner, Thomas, 51427 Bergisch Gladbach (DE)
(72) Erfinder: Rohner, Thomas, 51427 Bergisch Gladbach (DE)
(74) Vertreter: Patentanwälte Lippert, Stachow, Schmidt & Partner
(86) Internationale Anmeldenummer: DE9701028
(87) Internationale Veröffentlichungsnummer: WO97045838

(56) Entgegenhaltungen:
- EP-A- 0 556 919
- NL-A- 9 300 261
- US-A- 3 635 350
- US-A- 5 415 298

## Beschreibung

Die Erfindung betrifft eine Halterung für rechteckige, flächige Gegenstände, insbesondere für CD-Boxen, Videokassetten nach dem Oberbegriff des Anspruchs 1.

Darüber hinaus betrifft die Erfindung verschiedene Verwendungen der erfindungsgemäßen Halterung als Lager- oder Regalsystem bestehend aus zumindest einer erfindungsgemäßen Halterung.

Halterungen zur Aufbewahrung, Lagerung oder Archivierung von rechteckigen Gegenständen wie CD-Boxen, Videokassetten sind als Regalsysteme in unterschiedlichen Ausführungen bekannt, wobei die Halterung der Teile horizontal oder vertikal erfolgen kann. Ein derartiges Regalsystem wird beispielsweise in der DE-PS 42 43 540 beschrieben.

Bei diesen Regalsystemen werden unterschiedliche Halterungen bzw. Tragelemente verwendet, die lösbar an Führungsprofilen befestigt sind und in deren Längsrichtung verschoben werden können. Auf diese Weise ist es möglich, beispielsweise bei der Archivierung, neue CD-Boxen mit zusätzlichen Halterungen an einer beliebigen Stelle im Regalsystem einfügen zu können.

Bei diesem bekannten Regalsystem ist jedoch die Anzahl der Halterungen durch die Länge der Führungsprofile begrenzt, außerdem sind die einzelnen Halterungen aufgrund der erforderlichen Befestigungselemente zum Befestigen der Halterungen an den Führungsprofilen vergleichsweise aufwendig herzustellen.

Auch ist bei diesem bekannten Regalsystem ein vergleichsweise großer Platzbedarf erforderlich, da die einzelnen zu lagernden Gegenstände zueinander beabstandet sind, damit sie aus den Halterungen bequem herausgenommen werden können.

In der NL 93 00 261 ist eine Halterung für CD-Kassetten offenbart, die einen offenen Rahmen mit in Abstand gegenüberliegenden Seitenschenkeln und einen die Seitenschenkel verbindenden Querschenkel aufweist. Die gattungsbildende Halterung weist einen Haltesteg vorgegebener Dicke für die CD auf, insofern ist eine Lagerung der zu haltenden CD ohne Zwischenraum nicht möglich. Ferner können die CDs nicht bequem aus der jeweiligen Halterung entnommen werden.

Aus der US 5,415,298 ist ferner ein Behälter bekannt, der einen schrägen Rücken, eine Basis sowie einen Vorderanschlag aufweist. Der Boden des Behälters besitzt einen schräg nach hinten verlaufenden Abschnitt, einen schräg nach vorne verlaufenden Abschnitt sowie eine Spitze, wobei die Spitze etwas hinter dem Massenschwerpunkt der zu haltenden CD liegt. Die CD lehnt in ihrer Aufbewahrungsstellung gegen den schrägen Rücken des Behälters, wobei sich die vordere Kante der CD über die Spitze des Bodens hinaus erstreckt. Um eine bestimmte CD zu entnehmen, wird die betreffende CD an der vorderen Kante nach unten gedrückt, wodurch sie auf den schräg nach vorne verlaufenden Abschnitt fällt und gegen den Vorderanschlag rutscht. Die ausgewählte CD liegt nun außerhalb der Anordnungen der anderen CDs und kann leicht aus dem integral aufgebauten Behälter entnommen werden. Der Behälter ist im Hinblick auf den beschriebenen Entnahmevorgang gestaltet, was eine recht klobige Gestalt des Behälters zur Folge hat.

Der Erfindung liegt die Aufgabe zugrunde, eine Halterung für rechteckige, flächige Gegenstände zu schaffen, die preiswert herzustellen ist, bei der eine Lagerung der zu haltenden Gegenstände ohne Zwischenraum nebeneinander möglich ist und die dennoch bequem, ohne zusätzliche Manipulationen an den Halterungen vornehmen zu müssen, herausgenommen werden können und welche zum Aufbau eines kompakten Lager- und Regalsystems geeignet ist.

Diese Aufgabe wird erfindungsgemäß durch einen offenen Rahmen mit im Abstand gegenüberliegenden Seitenschenkeln und einem die Seitenschenkel verbindenden Querschenkel gelöst, die eine etwa U-förmige Aufnahme einschließen, wobei die Innenkanten der gegenüberliegenden Seitenschenkel zumindest über einen Großteil ihrer Längserstreckung jeweils parallel zueinander verlaufen und der Abstand zwischen den Innenkanten der Seitenschenkel in ihrem parallelen Verlauf einer Kantenlänge des zu haltenden Gegenstandes entspricht, wobei weiterhin die Länge mindestens einer Innenkante eines Seitenschenkels kürzer als die andere Kantenlänge des zu haltenden Gegenstandes ist und die Innenkante und Außenkante jedes Seitenschenkels nichtparallel zueinander verlaufen.

Durch die geometrischen Beziehungen der Innenkanten der Seitenschenkel zueinander bzw. zu den zu haltenden Gegenständen liegen CD-Boxen etwas gekippt zur Senkrechten bzw. Waagerechten im Inneren der Halterung. Dabei überragen sie die vordere Stirnfläche der Halterung zumindest an einer Seite, da die Länge mindestens einer Innenkante eines Seitenschenkels kürzer ist als eine Kantenlänge des zu haltenden Gegenstandes. Auf diese Weise entsteht eine vorstehende Ecke, die ein bequemes Herausnehmen der CD-Box gewährleistet.

Die Außenkontur der erfindungsgemäßen Halterung kann im Prinzip beliebig gewählt werden, bei einer vorteilhaften Weiterbildung der Erfindung ist der offene Rahmen jedoch als U-förmiger Winkelrahmen ausgebildet. Dabei liegen die Außenkanten ebenso wie die gegenüberliegenden Innenkanten der Seitenschenkel zumindest über einen Großteil ihrer Längserstreckung jeweils parallel zueinander und die Außenkanten der Seitenschenkel bilden mit der Außenkante des Querschenkels jeweils einen rechten Winkel.

Da bei dieser Ausführungsform die Außenkanten der drei Schenkel rechtwinklig miteinander verbunden sind, kann die Halterung platzsparend gegen die Rückwand eines Schrankregals, einer Schublade, eines Bords oder dergleichen aufgestellt werden.

Bei der Ausführungsform gemäß Anspruch 3, wo die Innenkanten der Seitenschenkel mit der Innenkante des Querschenkels zusätzlich rechte Winkel bilden und die Innenkante des Querschenkels zu seiner Außenkante nichtparallel verläuft, können die zu haltenden rechteckigen Gegenstände bündig gegen die Innenkante des hinteren Querschenkels geschoben werden, so daß die Außenkontur des zu haltenden Gegenstandes von dem erfindungsgemäßen Rahmen im hinteren Bereich formgenau umschlossen werden und die Größe des Rahmens minimiert ist.

Die Rahmen sind vorzugsweise so ausgebildet, daß sie der Breite des zu haltenden Gegenstandes entsprechen. Dann können die zu haltenden Gegenstände nebeneinander bzw. aufeinander angeordnet werden, ohne daß zwischen ihnen platzraubende Abstände bestehen.

Zur Bildung eines Regals werden nun mehrere Halterahmen nebeneinander so zusammengefügt, daß die Innenkanten der Seitenschenkel benachbarter Halterungen zur Horizontalen unterschiedlich gekippt sind. Dadurch befindet sich bei einer Halterung die vorstehende Ecke der CD-Box beispielsweise oben, während die vorstehende Ecke der CD-Box in den beiden benachbarten Halterungen jeweils unten liegt. Auf diese Weise können die einzelnen CD-Boxen bequem ergriffen und aus den Halterungen herausgezogen werden, ohne daß, wie bereits erwähnt, Abstände zwischen den einzelnen CD-Boxen erforderlich sind.

Die Neigungswinkel der Innenkanten der Seitenschenkel zur Waagerechten sind dabei vergleichsweise gering, so daß die CD-Boxen nicht selbsttätig aus den Halterungen nach vorne herausrutschen können.

Die erfindungsgemäßen Halterungen können zum Zusammenfügen im einfachsten Fall miteinander verklebt werden, und zwar derart, daß die Außenkanten der Schenkel miteinander fluchten. Auf diese Weise entsteht ein länglicher Lagerungskörper, der beliebig erweitert werden kann.

Um die einzelnen Rahmen miteinander verbinden zu können, weisen sie jedoch zweckmäßigerweise seitliche Befestigungselemente auf, die mit dem Befestigungselement des benachbarten Rahmens wechselwirken und so auf den Seitenflächen angeordnet sind, daß die Außenkanten der Schenkel miteinander fluchten. Hierbei sind die Befestigungselemente auf den Seitenflächen so angeordnet, daß die einzelnen Rahmen entweder mit fluchtenden oder nichtfluchtenden Innenkanten der Seitenschenkel neben bzw. aufeinander zusammengefügt werden können. Wenn die Innenkanten miteinander fluchten, kann beispielsweise ein Gegenstand eingestellt werden, der breiter als die Breite eines Rahmens ist. Auf diese Weise kann für unterschiedlich dicke CD-Kassetten, sofern sie übereinstimmende Kantenlängen haben, ein und derselbe Rahmen zum Zusammenbauen eines Regals verwendet werden. Wenn die Rahmen so zusammengesetzt werden, daß die Innenkanten ihrer Seitenschenkel nicht miteinander fluchten, wie dies üblicherweise der Fall ist, entstehen durch die gegeneinander gekippten Innenkanten vordere und hintere Führungsflächen, gegen die sich die eingelegte CD seitlich abstützt, so daß sie exakt in ihrer vertikalen oder horizontalen Lage gehalten wird.

Um die Rahmen, vorzugsweise lösbar, auf einfache Art und Weise miteinander verbinden zu können, können die Befestigungselemente beispielsweise als Noppen ausgebildet sein, die in entsprechende Wandungsaussparungen der jeweils benachbarten Rahmen einsetzbar bzw. eindrückbar sind. Darüber hinaus ist es zum Beispiel auch möglich, die Befestigungselemente als in die Wandung der Rahmen eingelassene Dauermagnete auszubilden, die mit entsprechenden magnetisierbaren Plättchen des benachbarten Rahmens wechselwirken.

Um die Halterungen sowohl mit miteinander fluchtenden wie auch gegeneinander geneigten Innenkanten ihrer Seitenschenkel nebeneinander zusammenfügen zu können, sitzen die Befestigungselemente auf der Seitenwandung der Rahmen so, daß die Noppen und Wandaussparungen bzw. die Dauermagneten und magnetisierbaren Plättchen im Uhrzeigersinn betrachtet abwechselnd angeordnet sind. Dazu ist es weiterhin erforderlich, daß einer Noppe auf der einen Seite des Rahmens eine Wandaussparung auf der anderen Seite gegenüberliegt. Dadurch können benachbarte Rahmen mit gleicher Position oder um 180° gedreht problemlos zusammengefügt werden.

Die Halterungen sind alle identisch ausgebildet und daher vergleichsweise preiswert herzustellen, insbesondere, wenn sie als Spritzgieß- oder Stanzteile hergestellt sind.

Um das Einführen einer Kassette im Stirnbereich eines Rahmens zu erleichtern, kann zumindest einer der Seitenschenkel auf seiner Innenkante eine Schräge aufweisen, die die Öffnungsweite des Rahmens vergrößert. Zum erleichterten Einstecken des zu haltenden Gegenstandes kann darüber hinaus zumindest einer der Seitenschenkel im Bereich seiner Innenkante eine kerbenartige Führungshilfe aufweisen. Diese Kerbe ist dabei so ausgebildet, daß sie eine Anlaufschräge bildet, die den einzusetzenden Gegenstand beim Hineinschieben in eine Richtung drückt, die parallel zur Längsmittelebene des Rahmens liegt. Entsprechen sich die Dicke des Rahmens und die Dicke des einzulagernden Gegenstandes, werden somit die Gegenstände automatisch so geführt, daß ihre Seitenflächen jeweils bündig zueinander liegen.

Wie bereits erwähnt, wird die Halterung vorzugsweise zur Bildung eines zusammensetzbaren Lager- oder Regalsystems verwendet. Dabei können zum seitlichen Verschließen der jeweils außenliegenden Rahmen Deckel verwendet werden, die auf ihren Innenseiten Befestigungselemente aufweisen, die mit denen des äußeren Rahmens wechselwirken, so daß eine glatte, ebene Abschlußfläche entsteht.

Eine weitere vorteilhafte Verwendung der erfindungsgemäßen Halterung besteht darin, daß sie als Verpackung oder Teil einer Verpackung für die rechteckigen Gegenstände verwendet werden kann.

Der Rahmen dient in dieser Funktion einerseits dem Schutz des Gegenstandes gegen mechanische Beschädigung und kann andererseits in der beschriebenen Weise als Teil eineserweiterbaren Regalsystems verwendet werden. Bei der zuletzt genannten Verwendung kann es vorteilhaft sein, an die vordere Stirnfläche des Rahmens einen zweiten Rahmen mit vergleichsweise kurzen Seitenschenkeln anzulegen. Der zweite Rahmen ist dabei so ausgebildet, daß er mit dem eigentlichen Rahmen eine flächige, rechteckige Verpackung bildet. Der zweite Rahmen ist dabei vorzugsweise durchsichtig, so daß zum Beispiel die auf der Rückseite einer CD-Kassette aufgedruckten Informationen gelesen werden können.

Bei der Verwendung eines zweiten Rahmens ist es auch problemlos möglich, die derart gebildete Verpackung mit einer vorzugsweise durchsichtigen Hülle aus Folie oder dergleichen zu versehen, die darüber hinaus den zweiten Rahmen fixiert. Auf die Hülle kann selbstverständlich auch verzichtet werden, wenn die beiden Rahmen mit Hilfe entsprechender Befestigungselemente aneinander fixiert werden können oder über eine Sollbruchstelle einstückig miteinander verbunden sind.

Die einzelnen Rahmen können im Bereich ihrer Seiten- und/oder Querschenkel Bohrungen oder Durchbrüche aufweisen, die in Richtung ihrer Längsmittelebene verlaufen. Mit Hilfe dieser Bohrungen ist es möglich, die Halterungen bzw. das aus ihnen zusammengesetzte Regal mit Hilfe von passenden Schrauben oder anderen geeigneten Befestigungselementen beispielsweise an einer glatten Wand zu befestigen.

Durch entsprechende Auswahl der jeweiligen, die Wandungsbohrungen durchgreifenden Befestigungselemente können die Regale auch an Halteschienen oder Halteösen befestigt werden.

Die Erfindung ist in der Zeichnung beispielsweise veranschaulicht und wird im nachfolgenden anhand der Zeichnungen im einzelnen erläutert.

Es zeigen
- Fig. 1: eine Seitenansicht eines Rahmens mit vier Schnitten,
- Fig. 2: eine Seitenansicht von zwei zusammengefügten Rahmen mit zwei Schnitten,
- Fig. 3: eine zweite Ausführungsform des Rahmens in einer Seitenansicht und
- Fig. 4: eine Seitenansicht gemäß Fig. 2 mit eingesetzten CD-Boxen.

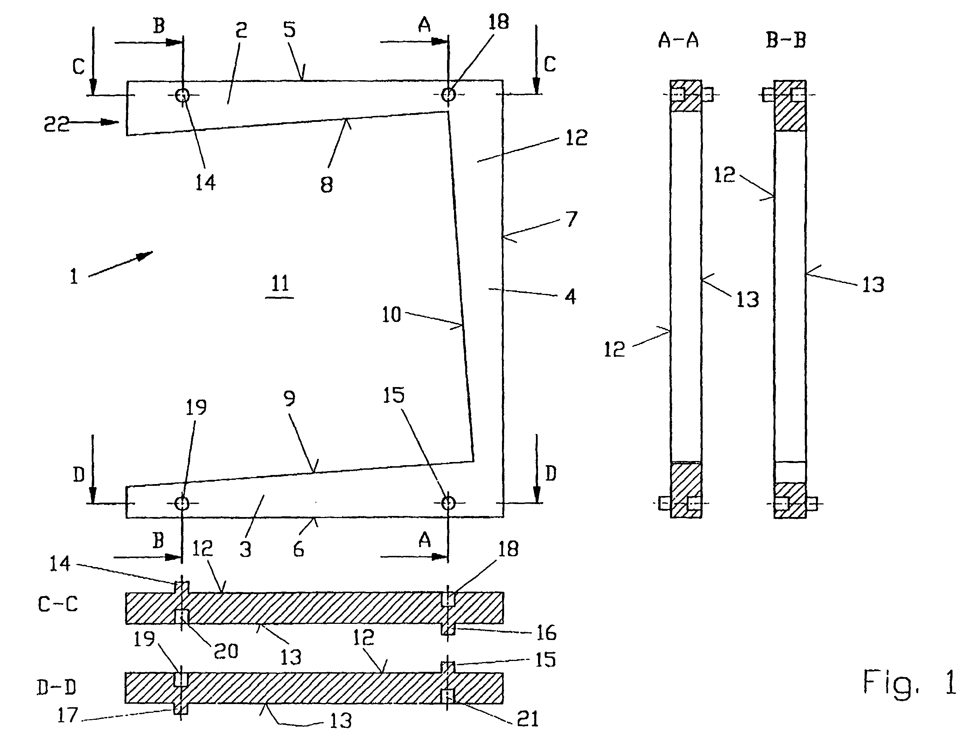

Der in Fig. 1 dargestellte Rahmen 1 besteht aus einem oberen Seitenschenkel 2, einem unteren Seitenschenkel 3 und einem die beiden Seitenschenkel 2, 3 verbindenden Querschenkel 4. Die Außenkante 5 des oberen Seitenschenkels 2 und die parallel dazu liegende Außenkante 6 des unteren Seitenschenkels 3 bilden mit der Außenkante 7 des Querschenkels 4 jeweils rechte Winkel.

Das gleiche gilt für die Innenkante 8 des oberen Seitenschenkels 2 und die Innenkante 9 des unteren Seitenschenkels 3, die mit der Innenkante 10 des Querschenkels 4 ebenfalls rechtwinklig verbunden sind. Dabei verlaufen die Innenkanten 8, 9, 10 jedoch nichtparallel zu den entsprechenden Außenkanten 5, 6, 7, so daß die durch die Innenkanten 8, 9, 10 begrenzte Aufnahme 11 gegenüber dem von den Außenkanten 5, 6, 7 gebildeten U gekippt ist.

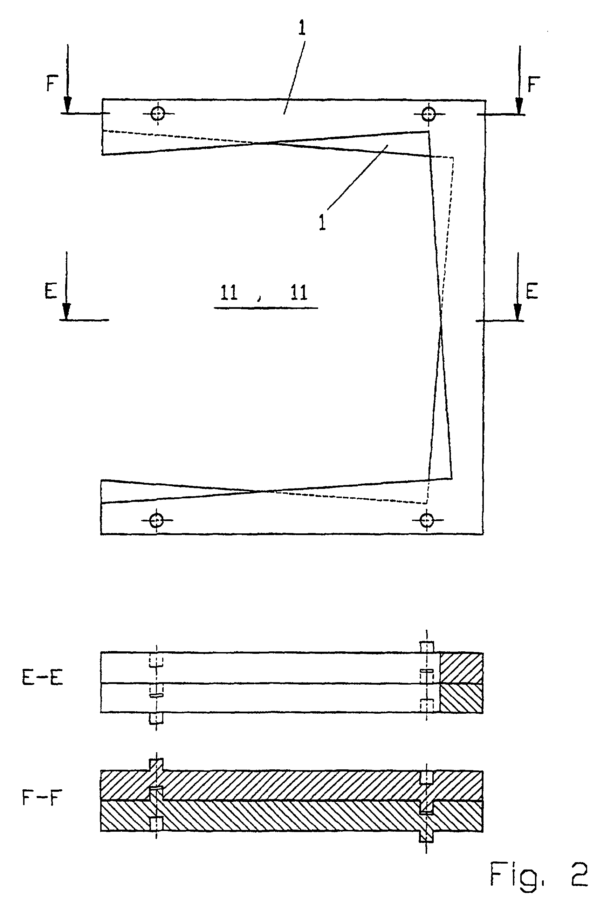

Die Seitenflächen 12, 13 des Rahmens 1 weisen jeweils zwei Noppen 14, 15 bzw. 16, 17 sowie jeweils zwei Bohrungen 18, 19 bzw. 20, 21 auf, wobei sich Noppen und Bohrungen im Uhrzeigersinn auf einer Seite abwechseln und auf den unterschiedlichen Seiten so angeordnet sind, daß eine Noppe auf der Seitenfläche 12 einer Bohrung auf der Seitenfläche 13 entspricht. Auf diese Weise können die Rahmen 1 mit fluchtenden Innenkanten 8, 9, aber auch um 180° gedreht zusammengesetzt werden, wobei in letzterer Stellung die Aufnahmen 11 gegeneinander verkippt sind. Diese Position zweier benachbarter Rahmen 1 ist in Fig. 2 dargestellt.

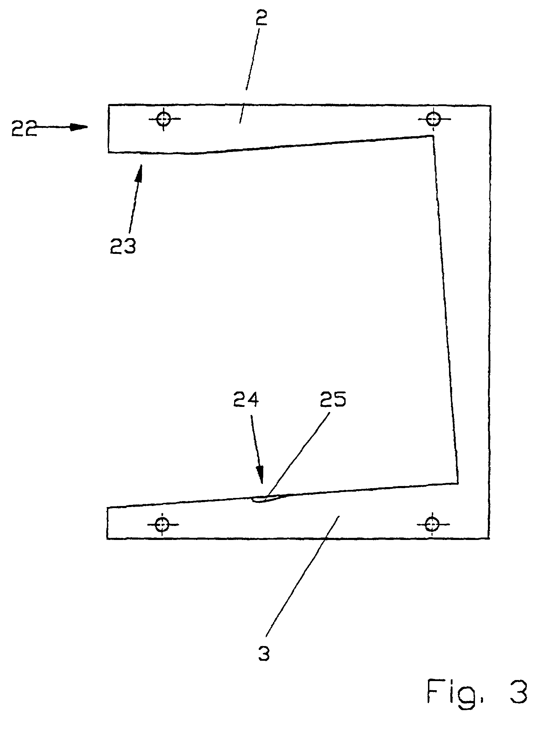

Der Rahmen 1 gemäß Fig. 3 entspricht im wesentlichen dem in Fig. 1 dargestellten, weist aber im Bereich der Stirnseite 22 am oberen Seitenschenkel 2 eine Schräge 23 auf, die die Öffnungsweite des Rahmens 1 im Bereich der Stirnseite 22 vergrößert.

Der untere Seitenschenkel 3 ist bei der Abbildung gemäß Fig. 3 mit einer kerbenartigen Führungshilfe 24 versehen, die beim Einsetzen beispielsweise einer CD-Box diese mit Hilfe einer Anlaufschräge 25 in Richtung der Längsmittelebene des Rahmens 1 drückt.

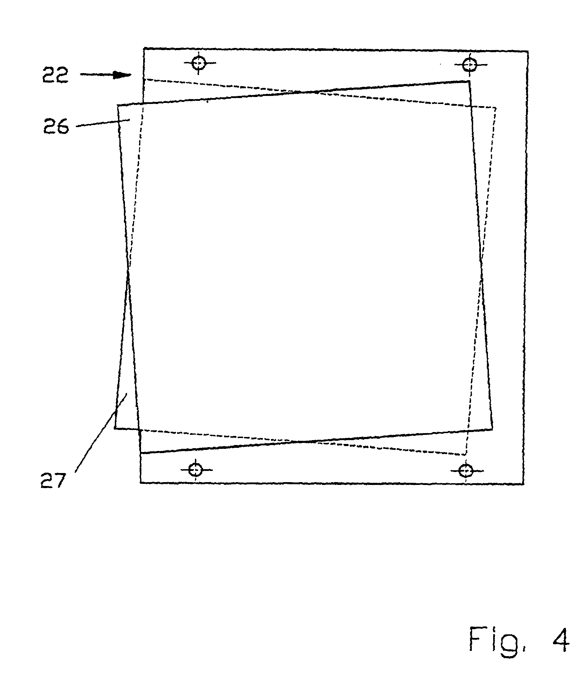

Die zusammengesetzten Rahmen 1 gemäß Fig. 4 entsprechen denen aus Fig. 2, wobei jedoch in jeden Rahmen eine CD-Box eingesetzt ist, die aufgrund der gegeneinander gekippten Aufnahmen 11 mit vorstehenden Ecken 26, 27, die sich jeweils unten bzw. oben befinden, um die Stirnseite 22 nach vorne überragen.

### Halterung für rechteckige Gegenstände und deren Verwendung

### Bezugszeichenliste

- 1: Rahmen
- 2: oberer Seitenschenkel
- 3: unterer Seitenschenkel
- 4: Querschenkel
- 5: Außenkante
- 6: Außenkante
- 7: Außenkante
- 8: Innenkante
- 9: Innenkante
- 10: Innenkante
- 11: Aufnahme
- 12: Seitenfläche
- 13: Seitenfläche
- 14: Noppen
- 15: Noppen
- 16: Noppen
- 17: Noppen
- 18: Bohrung
- 19: Bohrung
- 20: Bohrung
- 21: Bohrung
- 22: Stirnseite
- 23: Schräge
- 24: kerbenartige Führungshilfe
- 25: Anlaufschräge
- 26: Ecke
- 27: Ecke

## Patentansprüche

1. Halterung für rechteckige, flächige Gegenstände, insbesondere für CD-Boxen, Videokassetten, mit einem offenen Rahmen (1) mit im Abstand gegenüberliegenden Seitenschenkeln (2, 3) und einem die Seitenschenkel (2, 3) verbindenden Querschenkel (4), die eine etwa U-förmige Aufnahme (11) einschließen, wobei die Innenkanten (8, 9) der gegenüberliegenden Seitenschenkel (2, 3) zumindest über einen Großteil ihrer Längserstreckung parallel zueinander verlaufen und der Abstand zwischen den Innenkanten (8, 9) der Seitenschenkel (2, 3) in ihrem parallelen Verlauf einer Kantenlänge des zu haltenden Gegenstandes entspricht, wobei weiterhin die Länge mindestens einer Innenkante (8) eines Seitenschenkels (2) kürzer als die andere Kantenlänge des zu haltenden Gegenstandes ist, **dadurch gekennzeichnet, daß** die Innenkante (8 bzw. 9) und Außenkante (5 bzw. 6) jedes Seitenschenkels (2 bzw. 3) nichtparallel zueinander verlaufen.

2. Halterung nach Anspruch 1, **dadurch gekennzeichnet, daß** der Rahmen (1) U-förmig ausgebildet ist, wobei die Außenkanten (5, 6) der gegenüberliegenden Seitenschenkel (2, 3) zumindest über einen Großteil ihrer Längserstreckung parallel zueinander verlaufen und die Außenkanten (5, 6) der Seitenschenkel (2, 3) mit der Außenkante (7) des Querschenkels (4) jeweils einen rechten Winkel bilden.

3. Halterung nach Anspruch 1 oder 2, **dadurch gekennzeichnet, daß** die Innenkanten (8, 9) der Seitenschenkel (2, 3) mit der Innenkante (10) des Querschenkels (4) jeweils einen rechten Winkel bilden und die Innenkante (10) des Querschenkels (4) zu seiner Außenkante (7) nichtparallel verläuft.

4. Halterung nach einem der Ansprüche 1 bis 3, **dadurch gekennzeichnet, daß** die Breite des Rahmens (1) der Breite des zu haltenden Gegenstandes entspricht.

5. Halterung nach einem der Ansprüche 1 bis 4, **dadurch gekennzeichnet, daß** der Rahmen (1) seitliche Befestigungselemente (14, 15, 16, 17, 18, 19, 20, 21) zum Zusammenfügen mehrerer Rahmen (1) neben bzw. aufeinander aufweist, wobei die Außenkanten (5, 6, 7) der Schenkel (2, 3, 4) miteinander fluchten.

6. Halterung nach Anspruch 5, **dadurch gekennzeichnet, daß** die Befestigungselemente (14 bis 21) so angeordnet bzw. ausgebildet sind, daß die Rahmen (1) mit fluchtenden oder nichtfluchtenden Innenkanten (8, 9) der Seitenschenkel (2, 3) neben bzw. aufeinander zusammenfügbar sind.

7. Halterung nach einem der Ansprüche 5 oder 6, **dadurch gekennzeichnet, daß** die Befestigungselemente (14, 15, 16, 17) als Noppen ausgebildet sind, die in Wandungsaussparungen bzw. Bohrungen (18, 19, 20, 21) jeweils benachbarter Rahmen einsetzbar bzw. eindrückbar sind.

8. Halterung nach einem der Ansprüche 5 oder 6, **dadurch gekennzeichnet, daß** die Befestigungselemente als Dauermagnete ausgebildet sind, die mit magnetisierbaren Elementen jeweils benachbarter Rahmen (1) wechselwirken.

9. Halterung nach Anspruch 7 oder 8, **dadurch gekennzeichnet, daß** auf beiden Seiten des Rahmens Noppen (14 bis 17) und Wandaussparungen bzw. Bohrungen (18 bis 21) bzw. Dauermagnete und magnetisierbare Elemente in oder gegen den Uhrzeigersinn betrachtet abwechselnd angeordnet sind, wobei einer Noppe (14, 15) bzw. einem Dauermagneten auf der Seitenfläche (12) eine Bohrung (20, 21) bzw. ein magnetisierbares Element auf der Seitenfläche (13) gegenüberliegt.

10. Halterung nach einem der Ansprüche 1 bis 9, **dadurch gekennzeichnet, daß** sie als Spritzgieß- oder Stanzteil ausgebildet ist.

11. Halterung nach einem der Ansprüche 1 bis 10, **dadurch gekennzeichnet, daß** zumindest einer der Seitenschenkel (2) im Stirnbereich (22) eine die Öffnungsweite des Rahmens (1) vergrößernde Schräge (23) aufweist.

12. Halterung nach einem der Ansprüche 1 bis 11, **dadurch gekennzeichnet, daß** zumindest einer der Seitenschenkel (3) im Bereich seiner Innenkante (9) eine kerbenartige Führungshilfe (24) zum Einsetzen des rechteckigen, flächigen Gegenstandes aufweist.

13. Lager- oder Regalsystem, das aus mindestens einer Haiterung nach einem der Ansprüche 1 bis 12 zusammensetzbar ist.

14. Lager- oder Regalsystem nach Anspruch 13, wobei die im Lager- oder Regalsystem außen bzw. oben und unten befindlichen Halterungen mittels eines Deckels seitlich verschließbar sind.

15. Verwenden einer Halterung nach einem der Ansprüche 1 bis 12 als Verkaufsverpackung oder Teil einer Verkaufsverpackung für rechteckige, flächige Gegenstände.

16. Verwendung einer Halterung nach Anspruch 15, wobei ein mit seiner Stirnseite gegen die Stirnseite (22) des Rahmens (1) anliegender zweiter Rahmen vorgesehen ist, der mit dem Rahmen (1) eine flächige Verpackung bildet.

17. Verwenden einer Halterung nach Anspruch 15 oder 16, wobei der oder die Rahmen und der rechteckige, flächige Gegenstand ganz oder teilweise von einer Hülle umgeben sind.

## Claims

1. A holder for flat rectangular objects, in particular CD-boxes and video cassettes, comprising an open frame (1) with side limbs (2, 3) which are disposed in opposite relationship at a spacing and a transverse limb (4) connecting the side limbs (2, 3), which limbs form a substantially U-shaped receiving means (11), wherein the inner edges (8, 9) of the oppositely disposed side limbs (2, 3) extend in mutually parallel relationship at least over a large part of their longitudinal extent and the spacing between the inner edges (8, 9) of the side limbs (2, 3) corresponds in their parallel configuration to an edge length of the object to be held, wherein moreover the length of at least one inner edge (8) of a side limb (2) is shorter than the other edge length of the object to be held, **characterised in that** the inner edge (8 or 9) and the outer edge (5 or 6) of each side limb (2 or 3 respectively) extend in mutually non-parallel relationship.

2. A holder according to claim 1 **characterised in that** the frame (1) is of a U-shaped configuration, wherein the outer edges (5, 6) of the oppositely disposed side limbs (2, 3) extend in mutually parallel relationship at least over a large part of their longitudinal extent and the outer edges (5, 6) of the side limbs (2, 3) respectively form a right angle with the outer edge (7) of the transverse limb (4).

3. A holder according to claim 1 or claim 2 **characterised in that** the inner edges (8, 9) of the side limbs (2, 3) respectively form a right angle with the inner edge (10) of the transverse limb (4) and the inner edge (10) of the transverse limb (4) extends in non-parallel relationship with its outer edge (7).

4. A holder according to one of claims 1 to 3 **characterised in that** the width of the frame (1) corresponds to the width of the object to be held.

5. A holder according to one of claims 1 to 4 **characterised in that** the frame (1) has lateral fixing elements (14, 15, 16, 17, 18, 19, 20, 21) for assembling a plurality of frames (1) beside each other or on each other, wherein the outer edges (5, 6, 7) of the limbs (2, 3, 4) are aligned with each other.

6. A holder according to claim 5 **characterised in that** the fixing elements (14 to 21) are of such an arrangement and configuration that the frames (1) can be assembled beside each other or on each other with aligned or non-aligned inner edges (8, 9) of the side limbs (2, 3).

7. A holder according to one of claims 5 or 6 **characterised in that** the fixing elements (14, 15, 16, 17) are in the form of knobs which can be inserted or pressed into wall openings or bores (18, 19, 20, 21) in respectively adjacent frames.

8. A holder according to one of claims 5 or 6 **characterised in that** the fixing elements are in the form of permanent magnets which interact with magnetisable elements of respectively adjacent frames (1).

9. A holder according to claim 7 or claim 8 **characterised in that** knobs (14 to 17) and wall openings or bores (18 to 21) or permanent magnets and magnetisable elements respectively are arranged on both sides of the frame alternately as considered in the clockwise or anticlockwise direction, wherein disposed opposite a knob (14, 15) or a permanent magnet on the side surface (12) is a bore (20, 21) or a magnetisable element respectively on the side surface (13).

10. A holder according to one of claims 1 to 9 **characterised in that** it is in the form of an injection-moulded or stamped member.

11. A holder according to one of claims 1 to 10 **characterised in that** at least one of the side limbs (2) in the end region (22) has a bevel (23) which enlarges the width of the opening of the frame (1).

12. A holder according to one of claims 1 to 11 **characterised in that** in the region of its inner edge (9) at least one of the side limbs (3) has a notch-like guide aid (24) for insertion of the flat rectangular object.

13. A storage or shelf system which can be assembled from at least one holder according to one of claims 1 to 12.

14. A storage or shelf system according to claim 13 wherein the holders disposed in the storage or shelf system on the outside or top and bottom are laterally closable by means of a cover.

15. Use of a holder according to one of claims 1 to 12 as sales packaging or part of sales packaging for flat rectangular objects.

16. Use of a holder according to claim 15 wherein there is provided a second frame which bears with its end against the end (22) of the frame (1) and which with the frame (1) forms a flat packaging.

17. Use of a holder according to claim 15 or claim 16 wherein the frame or frames and the flat rectangular object are entirely or partially surrounded by a wrapping.

## Revendications

1. Support pour des objets parallélépipédiques, plats, en particulier pour des boîtiers de CD et cassettes vidéo, comprenant un cadre (1) ouvert avec des branches latérales (2, 3) opposées l'une à l'autre avec un écart et une branche transversale (4) reliant les branches latérales (2, 3) qui enferment un logement (11) à peu près en forme de U, les faces intérieures (8, 9) des branches latérales (2, 3) opposées s'étendant au moins sur une grande partie de leur étendue longitudinale parallèlement l'une à l'autre, et l'écart entre les faces intérieures (8, 9) des branches latérales (2, 3) correspondant dans leur tracé parallèle à la longueur d'un côté de l'objet à tenir, la longueur d'au moins une face intérieure (8) d'une branche latérale (2) étant plus courte que l'autre longueur d'un côté de l'objet à tenir, **caractérisé en ce que** la face intérieure (8 ou 9) et la face extérieure (5 ou 6) de chaque branche latérale (2 ou 3) ne sont pas parallèles l'une à l'autre.

2. Support selon la revendication 1, **caractérisé en ce que** le cadre (1) est en forme de U, les faces extérieures (5, 6) des branches latérales (2, 3) opposées l'une à l'autre étant parallèles l'une à l'autre au moins sur une grande partie de leur étendue longitudinale et les. faces extérieures (5, 6) des branches latérales (2, 3) formant chacune un angle droit avec la face extérieure (7) de la branche transversale (4).

3. Support selon la revendication 1 ou 2, **caractérisé en ce que** les faces intérieures (8, 9) des branches latérales (2, 3) forment un angle droit avec la face intérieure (10) de la branche transversale (4) et la face intérieure (10) de la branche transversale (4) n'est pas parallèle à sa face extérieure (7).

4. Support selon l'une quelconque des revendications 1 à 3, **caractérisé en ce que** la largeur du cadre (1) correspond à la largeur de l'objet à tenir.

5. Support selon l'une quelconque des revendications 1 à 4, **caractérisé en ce que** le cadre (1) présente des éléments de fixation latéraux (14, 15, 16, 17, 18, 19, 20, 21) destinés à assembler plusieurs cadres (1) l'un à côté de l'autre ou l'un sur l'autre, les faces extérieures (5, 6, 7) des branches (2, 3, 4) étant alignées.

6. Support selon la revendication 5, **caractérisé en ce que** les éléments de fixation (14 à 21) sont disposés et formés de telle sorte que les cadres (1) puissent être assemblés l'un à côté de l'autre ou l'un sur l'autre avec des faces intérieures (8, 9) des branches latérales (2, 3) alignées ou non alignées.

7. Support selon l'une des revendications 5 ou 6, **caractérisé en ce que** les éléments de fixation (14, 15, 16, 17) ont la forme de boutons qui peuvent s'insérer ou s'enfoncer dans des évidements pratiqués dans la paroi ou des orifices (18, 19, 20, 21) de cadres voisins.

8. Support selon l'une des revendications 5 ou 6, **caractérisé en ce que** les éléments de fixation sont conçus comme des aimants permanents qui sont interactifs avec des éléments magnétisables de cadres (1) voisins.

9. Support selon la revendication 7 ou 8, **caractérisé en ce que** des boutons (14 à 17) et des évidements ou orifices (18 à 21) ou des aimants permanents et des éléments magnétisables sont disposés des deux côtés du cadre alternativement quand on regarde dans le sens des aiguilles d'une montre ou dans le sens contraire, un orifice (20, 21) ou un élément magnétisable situé sur la face latérale (13) étant opposé à un bouton (14, 15) ou à un aimant permanent. situé sur la face latérale (12).

10. Support selon l'une quelconque des revendications 1 à 9, **caractérisé en ce qu'**il est constitué d'une pièce moulée par injection ou estampée.

11. Support selon l'une quelconque des revendications 1 à 10, **caractérisé en ce qu'**au moins une des branches latérales (2) présente, dans la zone située à l'avant (22), un biseau (23) agrandissant la largeur d'ouverture du cadre (1).

12. Support selon l'une quelconque des revendications 1 à 11, **caractérisée en ce qu'**au moins une des branches latérales (3) présente, dans la zone de sa face intérieure (9), un auxiliaire de guidage en forme d'entaille (24) pour insérer l'objet parallélépipédique plat.

13. Système de stockage ou de rayonnage qui peut être composé à partir d'au moins un support selon l'une quelconque des revendications 1 à 12.

14. Système de stockage ou de rayonnage selon la revendication 13, les supports se trouvant à l'extérieur, respectivement en haut et en bas, du système de stockage ou de rayonnage, pouvant être fermés au moyen d'un couvercle.

15. Utilisation d'un support selon l'une quelconque des revendications 1 à 12 comme emballage de vente ou partie d'un emballage de vente pour des objets parallélépipédiques.

16. Utilisation d'un support selon la revendication 15, un deuxième cadre dont la face avant est adjacente à la face avant (22) du cadre (1) étant prévu, le deuxième cadre formant avec le cadre (1) un emballage plat.

17. Utilisation d'un support selon la revendication 15 ou 16, le cadre ou les cadres et l'objet parallélépipédique plat étant entourés en totalité ou en partie par une enveloppe.
